Europäisches Patentamt

European Patent Office

Office européen des brevets

(19)

(11) Numéro de publication : **0 280 633 B1**

(12) **FASCICULE DE BREVET EUROPEEN**

(45) Date de publication du fascicule du brevet :
**29.04.92 Bulletin 92/18**

(51) Int. Cl.⁵ : **A01F 25/20, B23D 51/16**

(21) Numéro de dépôt : **88440007.8**

(22) Date de dépôt : **03.02.88**

(54) **Machine pour le prélèvement de blocs de fourrage dans un silo.**

(30) Priorité : **16.02.87 FR 8702185**

(43) Date de publication de la demande :
**31.08.88 Bulletin 88/35**

(45) Mention de la délivrance du brevet :
**29.04.92 Bulletin 92/18**

(84) Etats contractants désignés :
**DE FR GB IT NL**

(56) Documents cités :
**EP-A- 0 081 447**
**EP-A- 0 176 748**
**FR-A- 1 021 857**

(56) Documents cités :
**GB-A- 258 040**
**US-A- 3 016 932**
**US-A- 3 929 048**
**US-A- 3 978 862**

(73) Titulaire : **KUHN S.A.**
**4, Impasse des Fabriques**
**F-67700 Saverne (FR)**

(72) Inventeur : **Wattron, Bernard**
**17, rue des Jardins Haegen**
**F-67700 Saverne (FR)**

(74) Mandataire : **Andres, Jean-Claude**
**KUHN S.A. 4, Impasse des Fabriques**
**F-67700 Saverne (FR)**

EP 0 280 633 B1

Jouve, 18, rue Saint-Denis, 75001 PARIS

## Description

La présente invention se rapporte aux machines pour le prélèvement de blocs de fourrage dans un silo sensiblement horizontal, comportant notamment un châssis qui est pourvu à sa partie inférieure de pointes et, à une certaine distance au-dessus de ces pointes, d'un bras ou d'un rail porteur d'un dispositif de coupe comprenant un ou plusieurs couteaux qui sont animés durant la coupe et sont déplacés et/ou guidés au moyen dudit bras ou rail porteur, chaque couteau étant relié à un support qui est déplacé au moyen d'une partie excentrée d'un tourillon tournant autour de son axe longitudinal durant le travail.

Sur une machine de ce genre, connue dans la demande de brevet EP-A-0 081 447, le dispositif de coupe comporte deux couteaux. Les supports de ces couteaux sont guidés près de chacune de leurs extrémités au moyen de galets. Ceux-ci sont situés de part et d'autre desdits supports et s'engagent dans des rainures prévues dans leurs flancs.

Chaque support d'un de ces couteaux comporte un orifice oblong sensiblement horizontal dans lequel tourne la partie excentrée du tourillon. Par suite de cette rotation, chaque support et le couteau correspondant sont soumis à des déplacements rectilignes.

Lors de la coupe dans les produits ensilés les couteaux avancent ensemble sur une même ligne. Par conséquent, ils doivent se dégager un large passage dans lesdits produits. De ce fait, lorsqu'il s'agit de produits fortement tassés, la puissance nécessaire à cet effet est très importante. Les forces qui s'exercent alors sur les couteaux provoquent souvent des déformations. Celles-ci engendrent des déviations des couteaux de leur trajectoire normale. Elles peuvent aussi causer la casse des couteaux.

Par ailleurs, le guidage rectiligne des supports des couteaux présente plusieurs inconvénients. En raison du jeu qui se créé entre ces supports et leurs galets de guidage, les couteaux adoptent durant le découpage une position légèrement inclinée par rapport à la verticale. De ce fait, les parties inférieures des couteaux se trouvent en retrait par rapport aux parties supérieures, ce qui entraîne également des déviations des couteaux, notamment dans les angles de leur trajectoire.

D'autre part, le guidage rectiligne des supports des couteaux nécessite que leurs flancs soient usinés et traités. Toutes ces opérations, ainsi que le grand nombre de galets nécessaires pour un tel guidage augmentent considérablement le prix du dispositif de coupe ainsi réalisé.

La présente invention a pour but d'obvier aux inconvénients précités des machines connues. Elle doit notamment simplifier le dispositif de coupe, faciliter la coupe des produits et améliorer le guidage des couteaux.

A cet effet, une importante caractéristique de l'invention consiste en ce que chaque support d'un couteau est monté libre en rotation sur des parties excentrées de plusieurs tourillons, qu'un de ces tourillons est placé près de chaque extrémité desdits supports et que l'un de ces tourillons est relié à un moyen d'entraînement.

Cet agencement permet d'animer les couteaux de mouvements rotatifs autour desdits tourillons. De cette manière, les couteaux avancent alternativement dans le silo, de sorte qu'il n'y a constamment que la largeur d'un couteau à dégager. La force nécessaire pour leur avance est ainsi inférieure à celle qu'il faut pour l'avance des couteaux des machines connues. Grâce à la réduction des pressions qui s'exercent sur les couteaux, ceux-ci subissent moins de déformations et restent sur leur trajectoire normale.

Par ailleurs, les moyens de guidage et d'entraînement des supports des couteaux sont extrêmement simples et d'un coût peu élevé. De plus, lesdits moyens ne nécessitent pas de jeux de fonctionnement, ce qui permet d'avoir un guidage des couteaux particulièrement précis.

Selon une autre caractéristique de l'invention, les tourillons sur lesquels sont montés les supports des couteaux sont reliés entre eux au moyen d'un organe assurant une liaison positive. De cette manière, on obtient une rotation synchrone desdits tourillons et par conséquent un entraînement régulier des couteaux. Cette liaison peut par exemple être réalisée au moyen d'une courroie crantée, d'une chaîne ou de bielles.

Selon une autre caractéristique de l'invention, les valeurs de l'excentricité des excentriques des tourillons d'un même support de couteau sont différentes. Cette caractéristique permet par exemple de faire varier le déplacement de la partie inférieure du couteau correspondant par rapport à sa partie supérieure.

Conformément à une autre caractéristique de l'invention, le dispositif de coupe comporte trois couteaux animés. Ces couteaux sont disposés côte à côte et sont fixés sur des supports montés sur des tourillons munis d'excentriques. Les excentriques des trois supports des couteaux sont décalés entre eux d'angles d'environ 120°. En raison de ce décalage, il y a constamment au moins un couteau dans la phase de coupe. Ceci permet d'obtenir une coupe continue et une avance régulière.

D'autres objets et caractéristiques de l'invention ressortiront de la description ci-après, avec référence aux dessins ci-annexés qui représentent, à titre d'exemples non limitatifs, quelques formes de réalisation selon l'invention.

Dans ces dessins :
– La figure 1 représente une vue de côté partiellement en coupe d'une machine selon l'invention,
– La figure 2 représente une coupe verticale d'un premier exemple de réalisation du dispositif de coupe,

– La figure 3 représente une coupe similaire à celle de la figure 2 d'un autre exemple de réalisation du dispositif de coupe,

– La figure 4 représente une coupe selon le plan IV-IV de la figure 3,

– La figure 5 représente une coupe similaire à celle de la figure 2 d'un autre exemple de réalisation,

– La figure 6 représente une vue de face du dispositif de la figure 5,

– La figure 7 représente une coupe verticale d'un autre exemple de réalisation,

– La figure 8 représente une vue de face du dispositif de la figure 7,

– La figure 9 représente une coupe verticale d'un autre exemple de réalisation,

– La figure 10 représente une vue de face du dispositif de la figure 9,

– La figure 11 représente une coupe verticale d'un autre exemple de réalisation,

– La figure 12 représente une vue de face du dispositif de la figure 11.

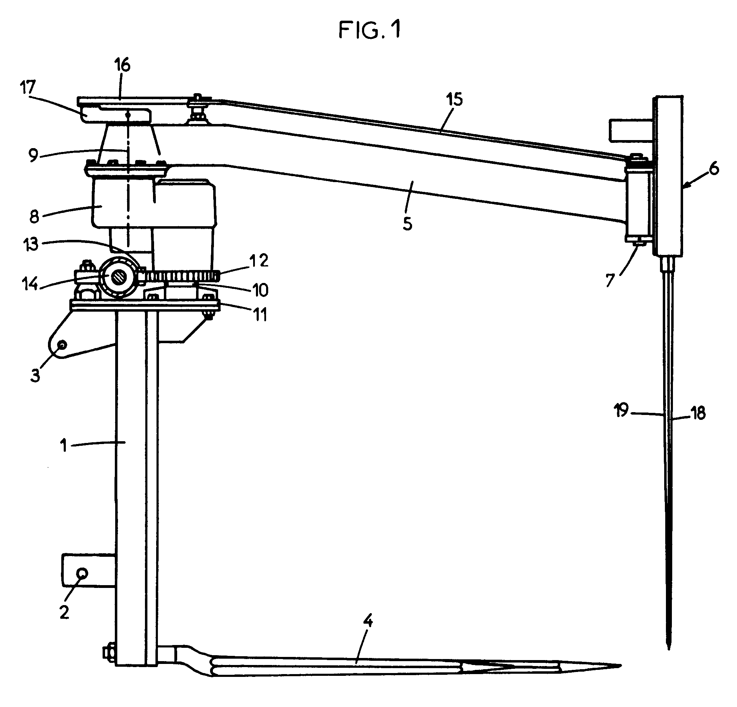

Telle qu'elle est représentée sur la figure 1, la machine selon l'invention comporte notamment un châssis (1) formant un cadre rigide. Ce châssis (1) possède trois points d'accouplement pour l'attelage à un tracteur d'entraînement non représenté. Ces points d'attelage sont constitués par deux chapes inférieures (2) et une chape supérieure (3). Ledit châssis est également pourvu à sa partie inférieure de plusieurs pointes (4) qui s'étendent dans un plan sensiblement horizontal. A une certaine distance au-dessus de ces pointes (4) est prévu un bras support (5) portant à son extrémité extérieure un dispositif de coupe (6). Celui-ci est articulé sur ledit bras au moyen d'un axe sensiblement vertical (7).

Le bras support (5) du dispositif de coupe (6) est articulé dans un boîtier (8) au moyen d'un axe sensiblement vertical dont seul l'axe géométrique (9) est représenté sur la figure 1. Ce boîtier (8) est lui-même articulé sur un axe sensiblement vertical (10) qui est fixé sur une plaque (11) solidaire du châssis (1). A la base du boîtier (8) est prévue une couronne dentée (12) qui engrène avec une crémaillère (13) fixée sur le corps d'un vérin hydraulique (14) à double tige solidaire du châssis (1). Dans ledit boîtier (8), chacun des deux axes (9 et 10) précités porte une roue dentée. Ces deux roues communiquent entre elles au moyen d'une roue dentée intermédiaire également logée dans le boîtier (8).

Le déplacement de la tête de coupe (6) en vue du découpage d'un bloc est obtenu en faisant se déplacer longitudinalement le corps du vérin (14) et la crémaillère (13). Celle-ci fait alors tourner le boîtier (8) autour de l'axe (10), lequel boîtier déplace à son tour le bras support (5). Ce déplacement du bras support (5) s'opère dans la direction opposée au sens de rotation du boîtier (8) en raison de l'agencement des roues dentées précitées. En sus, la vitesse de rotation du bras support (5) sur son axe d'articulation avec le boîtier (8) est égale à quatre tiers de la vitesse de rotation dudit boîtier sur son axe (10). Cet agencement permet de déplacer le dispositif de coupe (6) suivant une trajectoire en forme de U en vue du découpage de blocs sensiblement rectangulaires.

Durant ledit découpage, le dispositif de coupe (6) est orienté autour de l'axe d'articulation (7) avec le bras support (5) afin de le maintenir constamment tangent à sa trajectoire. Cette orientation est assurée au moyen d'une tringle (15) articulée sur le dispositif de coupe (6) et reliée à une seconde tringle (16) qui est commandée par une manivelle (17) reliée au boîtier support (8) par un axe traversant l'axe d'articulation du bras support (5).

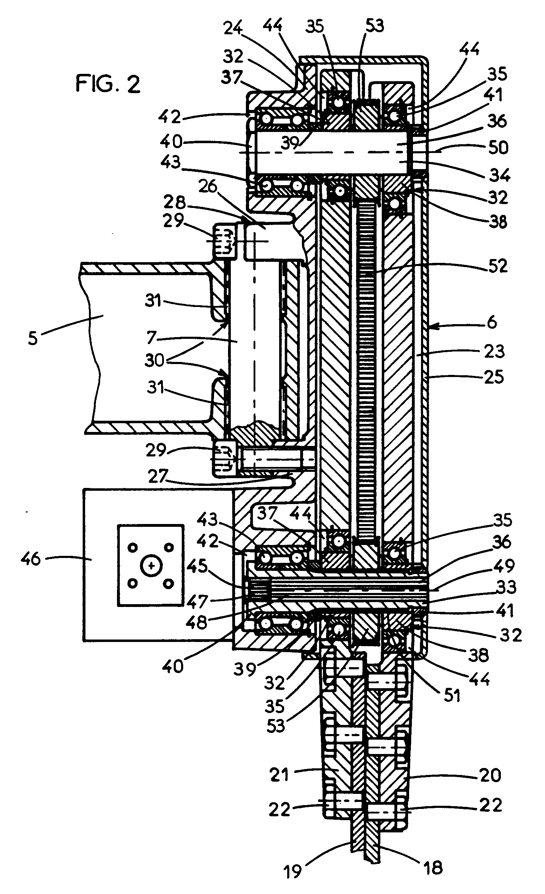

Dans les exemples de réalisation représentés en détail sur les figures 2 à 10, le dispositif de coupe (6) comporte deux couteaux dentés (18 et 19) qui s'étendent vers le bas pratiquement jusqu'au niveau des pointes (4) du châssis (1). Chacun de ces couteaux (18, 19) est fixé sur un support (20, 21) au moyen de vis (22). Ces supports (20 et 21) se situent en grande partie dans un boîtier (23) constitué par une paroi (24) et un couvercle (25) qui peut être fixé sur ladite paroi au moyen de vis. Cette paroi (24) comporte sur sa face opposée au couvercle (25) deux pattes (26 et 27) ayant chacune une découpe (28) dans laquelle est logé l'axe d'articulation (7) précité. Tel que cela ressort de la figure 2, ledit axe est fixé sur la paroi (24) au moyen de vis (29). Il est par ailleurs guidé dans un alésage (30) du bras (5) à l'aide de roulements à aiguilles (31).

Les supports (20 et 21) des couteaux (18 et 19) sont montés libres en rotation sur des parties excentrées (32) de tourillons (33 et 34) au moyen de roulements à billes (35). Il ressort notamment des vues en coupe que chaque tourillon (33, 34) se compose d'un corps cylindrique (36) muni de deux excentriques (37 et 38). Ces derniers sont positionnés sur ces corps cylindriques à l'aide d'entretoises ou de rondelles (39) et sont bloqués au moyen d'épaulements (40) qui sont prévus à l'une des extrémités desdits corps cylindriques et d'écrous (41) qui se vissent sur des parties filetées de leurs autres extrémités.

Ces tourillons (33 et 34) peuvent tourner autour de leurs axes longitudinaux (49 et 50) durant le découpage. A cet effet, ils sont guidés dans des alésages (42) de la paroi (24) du boîtier (23) au moyen de roulements (43) à deux rangées de billes à contact angulaire. Ils s'étendent horizontalement et sont dirigés perpendiculairement au plan de coupe des couteaux (18 et 19).

Dans les exemples représentés, les deux supports (20 et 21) des couteaux (18 et 19) sont montés sur les mêmes tourillons (33 et 34). Ces derniers sont au nombre de deux, chacun se situant près d'une des extrémités desdits supports. A cet effet, chaque support (20 et 21) possède près de ses deux extrémités des alésages (44) dans lesquels sont logés les roulements à billes (35) servant à leur montage sur les tourillons (33 et 34). Les quatre excentriques (37, 38) sont sensiblement identiques. Les deux excentriques (37) d'un même support (21) occupent sensiblement la même position par rapport aux tourillons (33 et 34), mais sont décalés angulairement d'environ 180° par rapport aux excentriques (38) de l'autre support (20). On obtient ainsi une bonne répartition des masses et par conséquent un fonctionnement sans à-coups.

Le tourillon inférieur (33) est par ailleurs relié à l'arbre d'entraînement (45) d'un moteur hydraulique (46) fixé sur la paroi (24). Ladite liaison est assurée au moyen de cannelures (47) de l'arbre d'entraînement (45) qui coopèrent avec des cannelures complémentaires (48) prévues dans un alésage du tourillon (33).

L'entraînement des supports (20 et 21) et par conséquent des couteaux (18 et 19) s'effectue de la manière suivante : Le tourillon inférieur (33) est entraîné en rotation autour de son axe longitudinal (49) par le moteur hydraulique (46). Les excentriques (37 et 38) de ce tourillon (33) déplacent les supports (20 et 21) sur une trajectoire circulaire dont le rayon est égal à la valeur de leur excentricité. Le tourillon supérieur (34) est alors également mis en rotation autour de son axe longitudinal (50) par l'intermédiaire des supports (20 et 21) eux-mêmes.

Les deux tourillons (33 et 34) maintiennent les couteaux (18 et 19) sensiblement verticaux dans n'importe quelle position de leur trajectoire. Ces couteaux (18 et 19) coupent tour à tour le produit ensilé et se dégagent le passage nécessaire pour avancer dans le silo.

On constate également sur la figure 2 que le corps cylindrique (36) du tourillon inférieur (33) qui est relié au moteur hydraulique (46) comporte des cannelures (51) sur sa périphérie. Celles-ci coopèrent avec des cannelures complémentaires prévues dans les excentriques (37 et 38). Cet agencement assure une liaison positive entre ledit corps cylindrique (36) et ses excentriques (37 et 38), en vue d'éviter un déplacement relatif entre ces pièces.

Les deux tourillons (33 et 34) sont par ailleurs reliés au moyen d'une courroie crantée (52). Pour cela, chacun comporte entre ses deux excentriques (37 et 38) une poulie (53). La courroie (52) qui passe sur ces deux poulies (53) assure une synchronisation de la rotation des deux tourillons (33 et 34) et évite une indétermination du sens de rotation du tourillon supérieur (34) lorsque les supports (20 et 21) se situent aux points haut et bas de leur trajectoire. Ladite courroie crantée peut bien entendu être remplacée par une chaîne passant sur des roues dentées prévues à la place de poulies (53).

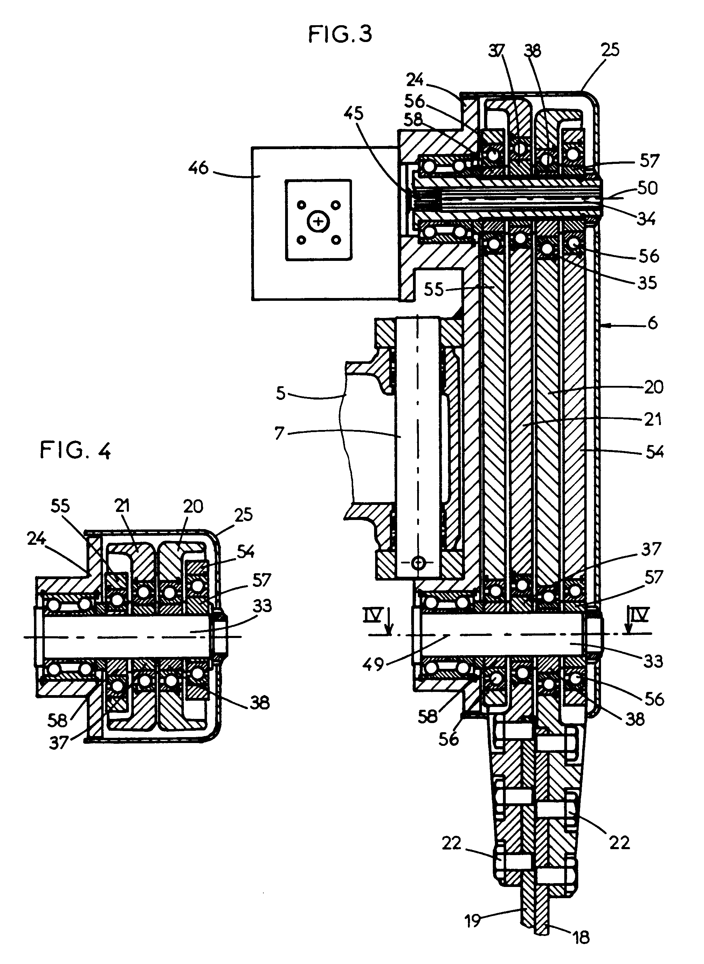

Dans l'exemple des figures 3 et 4, le montage des couteaux (18 et 19) est pratiquement analogue à celui de la figure 2 et ne sera plus décrit en détail. Dans cet exemple, le moteur d'entraînement (46) est relié au tourillon supérieur (34). D'autre part, la synchronisation entre les deux tourillons (33 et 34) est réalisée au moyen de deux bielles (54 et 55). Celles-ci se situent de part et d'autre des supports (20 et 21). Chaque bielle (54, 55) est montée au moyen de roulements à billes (56) sur deux excentriques (57, 58) dont l'un est solidaire du tourillon inférieur (33) et l'autre du tourillon supérieur (34). Ces excentriques (57 et 58) sont semblables à ceux des supports (20 et 21) des couteaux (18 et 19). Les excentriques (57) de la bielle (54) sont décalés angulairement d'environ 180° par rapport à ceux de l'autre bielle (55). Ces excentriques (57 et 58) des bielles (54 et 55) sont par ailleurs décalés angulairement d'environ 90° par rapport aux excentriques (37 et 38) des supports (20 et 21) des couteaux (18 et 19). Grâce à cette disposition, il y a constamment au moins un support (20, 21) ou une bielle (54, 55) qui se situe entre les deux positions extrêmes de leur course. De ce fait, la rotation des deux tourillons (33 et 34) autour de leurs axes longitudinaux (49 et 50) reste parfaitement synchronisée à la fois au démarrage et pendant le travail. En plus, l'utilisation de deux bielles (54 et 55) assure un bon équilibrage de l'ensemble des pièces en mouvement.

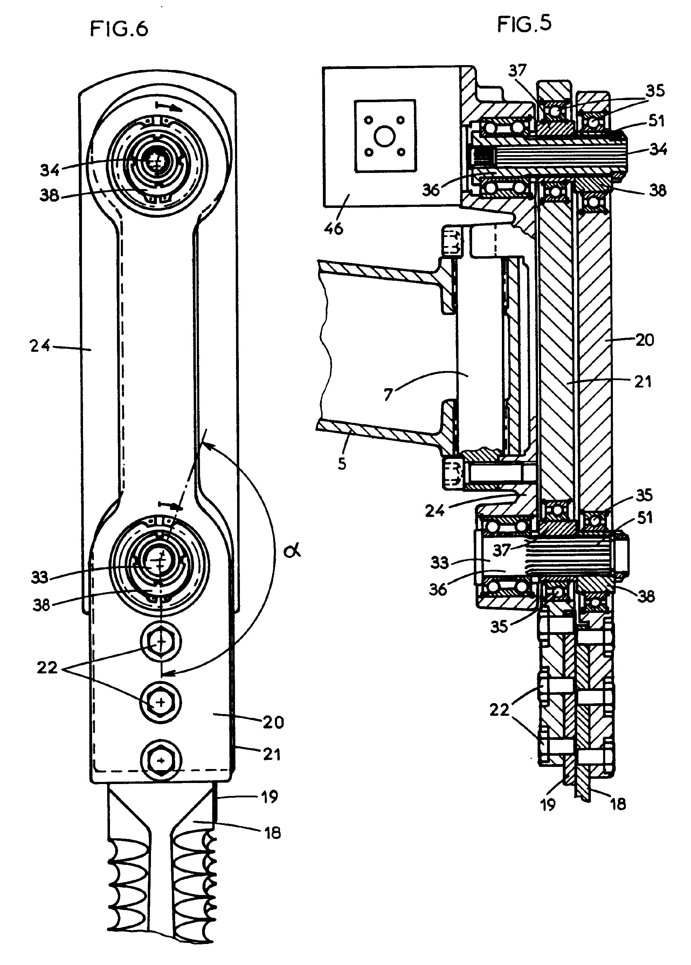

Dans l'exemple de réalisation des figures 5 et 6, les couteaux (18 et 19) sont également fixés sur des supports (20 et 21) montés au moyen de roulements à billes (35) sur deux tourillons (33 et 34) munis d'excentriques (37 et 38). Les excentriques (38) du support (20) sont décalés par rapport aux excentriques (37) de l'autre support (21) d'un angle ($\alpha$) d'environ 160° au lieu d'environ 180° comme dans les exemples précédents. Grâce à ce décalage inférieur à 180°, les deux supports (20 et 21) des couteaux (18 et 19) ne se situent pas en même temps au point haut et au point bas de leur course. De ce fait, le support (20 ou 21) qui n'est pas à un des points extrêmes de sa course, entraîne immanquablement le tourillon mené (33) dans la direction voulue. Dans ce mode de réalisation, la synchronisation des mouvements de rotation des deux tourillons (33 et 34) est assurée par les supports (20 et 21) eux-mêmes.

Il ressort également de la figure 5 que les corps cylindriques (36) des deux tourillons (33 et 34) comportent sur leur périphérie des cannelures (51) qui coopèrent avec des cannelures complémentaires prévues dans les excentriques (37 et 38). Cet agencement permet d'assurer la position desdits excentriques, même dans les conditions de travail difficiles.

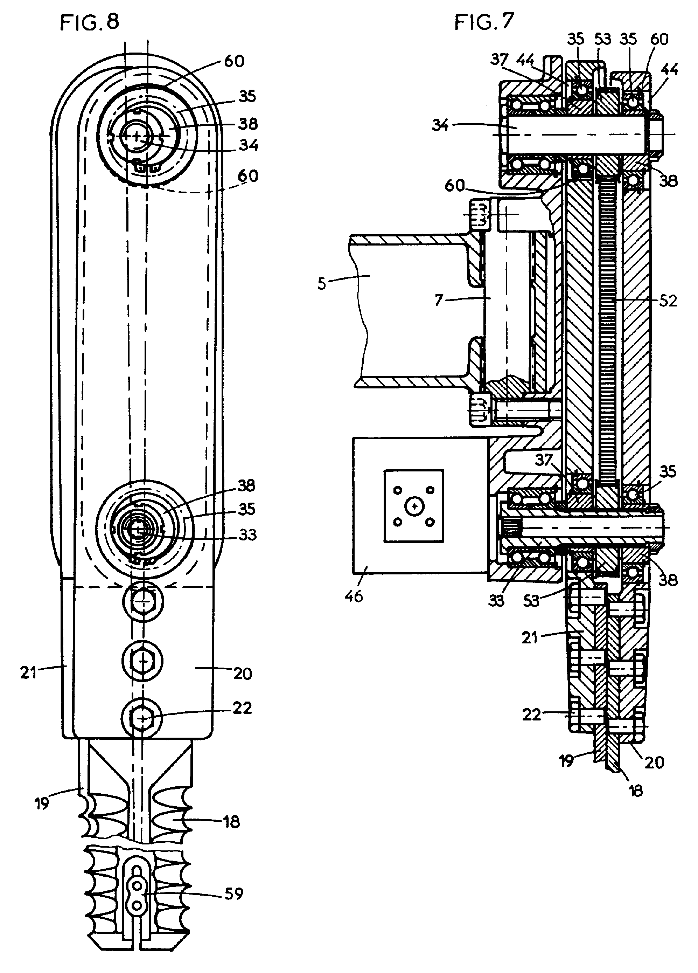

Dans l'exemple de réalisation selon les figures 7 et 8, la valeur de l'excentricité des excentriques (37 et 38) du tourillon supérieur (34) est différente de celle des excentriques (37 et 38) du tourillon inférieur (33). Cette caractéristique permet de faire varier la trajectoire des couteaux (18 et 19), en vue d'améliorer la coupe et/ou le guidage de ces derniers.

Sur la figure 8, les supports (20 et 21) des couteaux (18 et 19) sont déplacés d'un quart de tour par rapport à leur position sur la figure 7. Il ressort notamment de ladite figure 8 que la valeur de l'excentricité des excentriques (37 et 38) du tourillon inférieur (33) est environ égale à quatre cinquièmes de la valeur de l'excentricité des excentriques (37 et 38) du tourillon supérieur (34). En raison de ces valeurs, les supports (20) et 21) et les couteaux (18 et 19) sont dirigés de telle sorte que les extrémités inférieures desdits couteaux se rejoignent et se déplacent simplement sur une trajectoire rectiligne. On peut ainsi les maintenir assemblés, d'une manière connue en soi, au moyen d'un guide (59). Dans cet agencement, le déplacement vertical des couteaux (18 et 19) est défini par les excentriques (37 et 38) du tourillon inférieur (33). Pour cette raison, il est prévu un jeu vertical (60) entre les supports (20 et 21) et les roulements à billes (35) qui servent à leur guidage sur le tourillon supérieur (34) (figures 7 et 8). Par conséquent, les alésages (44) dans lesquels se montent les roulements à billes (35) pour le guidage sur le tourillon supérieur (34) sont légèrement oblongs. La valeur dudit jeu est légèrement supérieure à la différence entre les valeurs de l'excentricité des excentriques (37 et 38) des tourillons supérieur (34) et inférieur (33).

Les valeurs de l'excentricité des excentriques (37 et 38) des tourillons (33 et 34) peuvent être modifiées dans d'autres rapports que celui décrit ci-dessus, sans pour autant sortir du cadre de cette invention.

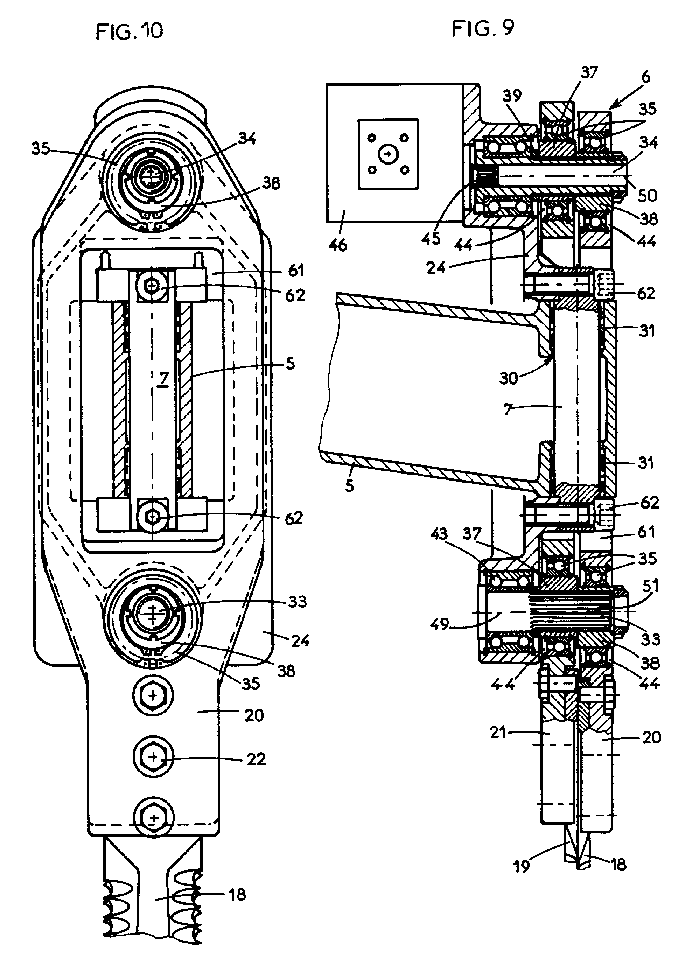

Les figures 9 et 10 représentent un autre exemple de montage du dispositif de coupe (6) sur le bras support (5). L'utilisation de seulement deux tourillons (33 et 34) pour le guidage et l'entraînement des supports (20 et 21) des couteaux (18 et 19) permet de placer l'axe d'articulation (7) avec le bras support (5) dans le plan de coupe des couteaux (18 et 19). Ceux-ci peuvent ainsi pratiquement tourner autour de leur axe longitudinal pour leur orientation, ce qui diminue le frottement sur la matière ensilée. De ce fait, la progression des couteaux (18 et 19) dans le silo, notamment dans les angles de leur trajectoire, est considérablement facilitée.

Dans ce mode de réalisation, chaque support (20, 21) des couteaux (18 et 19) comporte entre les deux alésages (44) pour leur guidage sur les tourillons (33 et 34) une ouverture centrale (61). L'extrémité avant du bras (5) et l'axe d'articulation (7) sont placés dans ces ouvertures (61). Pour le montage, il y a lieu d'engager le dispositif de coupe (6) sur le bras (5) jusqu'à ce que ce dernier dépasse sur le côté avant dudit dispositif. L'axe d'articulation (7) peut alors être engagé dans son logement (30) sur le bras (5). Ensuite le dispositif (6) peut être ramené vers ledit axe (7) et être fixé sur celui-ci au moyen des deux vis (62). Pour le démontage, il suffit de procéder dans l'ordre contraire.

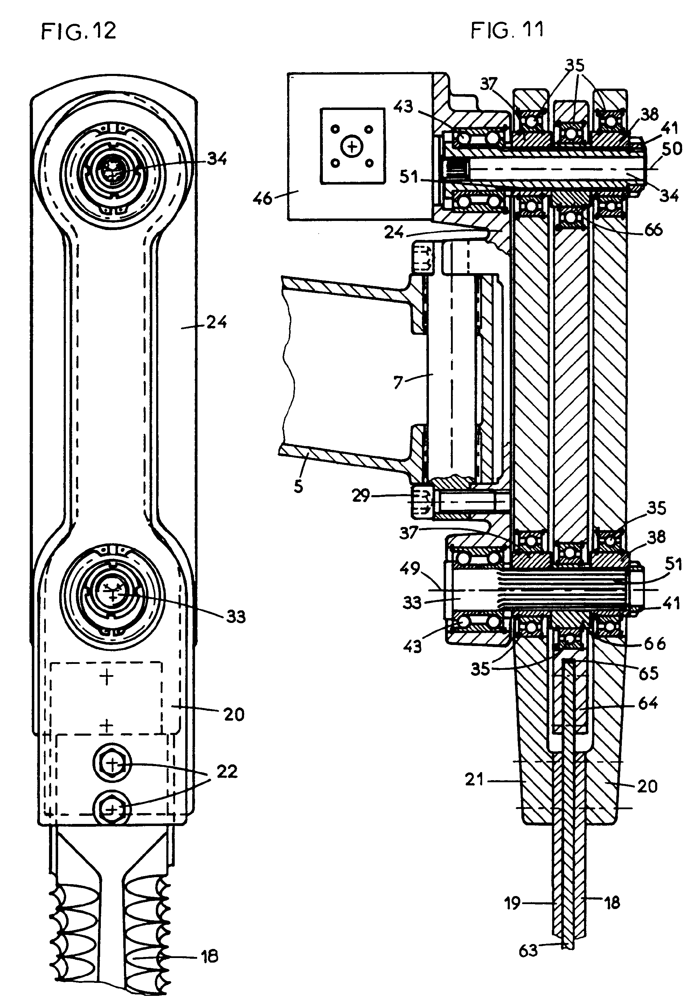

L'agencement selon l'invention n'est pas limité à l'emploi de deux couteaux pour la coupe. Les figures 11 et 12 montrent un exemple de réalisation avec trois couteaux (18, 19 et 63) disposés côte à côte et qui sont indépendants entre eux. Chacun de ces couteaux est fixé sur un support (20, 21 et 64) au moyen de vis (22). L'extrémité supérieure du couteau central (63) dépasse les deux autres couteaux (18 et 19) et est engagée dans une rainure (65) prévue à l'extrémité inférieure de son support (64).

Chacun de ces supports (20, 21 et 64) est monté au moyen de roulements à billes (35) sur deux excentriques (37, 38 et 66) de tourillons (33 et 34). Ceux-ci sont logés à l'aide de roulements à billes (43) dans la paroi arrière (24). Chaque tourillon (33, 34) comporte trois excentriques (37, 38 ou 66) décalés angulairement entre eux d'environ 120°. Le positionnement de ces excentriques est assuré au moyen de cannelures (51). Ils sont par ailleurs bloqués sur les tourillons (33, 34) à l'aide d'écrous (41).

Il ressort également de la figure 11 que le tourillon supérieur (34) est relié à un moteur hydraulique (46) qui assure l'entraînement des couteaux (18, 19 et 63). Comme dans les exemples décrits précédemment, le dispositif de coupe (6) est relié au bras (5) par l'axe d'articulation (7).

Grâce au décalage d'environ 120° des trois supports (20, 21 et 64) des couteaux (18, 19 et 63), ils ne se situent jamais ensemble aux deux points extrêmes de leur course. Ils assurent ainsi une rotation synchrone des deux tourillons (33 et 34) en vue d'une coupe régulière. Grâce au grand nombre de couteaux, cet agencement permet aussi une coupe très rapide.

Il est bien évident qu'on pourra apporter aux exemples de réalisation décrits ci-dessus divers perfectionnements, modifications ou additions ou remplacer certains éléments par des éléments équivalents, sans pour autant sortir du cadre de la présente invention telle que définie dans les revendications.

## Revendications

1. Machine pour le prélèvement de blocs de fourrage dans un silo sensiblement horizontal, comportant notamment un châssis (1) qui est pourvu à sa partie inférieure de pointes (4) et, à une certaine distance au-dessus de ces pointes, d'un bras (5) ou rail porteur d'un dispositif de coupe (6) comprenant un ou plusieurs couteaux (18, 19) qui sont animés durant la coupe et sont déplacés et/ou guidés au moyen dudit bras ou rail porteur, chaque couteau (18, 19) étant relié à un support (20, 21) qui est déplacé au moyen d'une partie excentrée (32) d'un tourillon (33, 34) tournant autour de son axe longitudinal durant le travail, caractérisée par le fait que chaque support (20, 21) d'un couteau (18, 19) est monté libre en rotation sur des parties excentrées (32) de plusieurs tourillons (33 et 34), qu'un de ces tourillons est placé près de chaque extrémité desdits supports (20 et 21) et que l'un de ces tourillons (33 et 34) est relié à un moyen d'entraînement (46).

2. Machine selon la revendication 1, caractérisée par le fait que chacun des tourillons (33 et 34) se compose d'un corps cylindrique (36) muni de deux excentriques (37 et 38) décalés entre eux d'un angle d'environ 180°.

3. Machine selon la revendication 1 ou 2, caractérisée par le fait que tous les supports (20 et 21) des couteaux (18 et 19) du dispositif de coupe (6) sont montés sur deux mêmes tourillons (33 et 34).

4. Machine selon l'une quelconque des revendications précédentes, caractérisée par le fait qu'au moins le tourillon (33 ou 34) qui est relié au moyen d'entraînement (46) comporte sur sa périphérie des cannelures (51) qui coopèrent avec des cannelures complémentaires prévues dans les excentriques (37 et 38).

5. Machine selon l'une quelconque des revendications précédentes, caractérisée par le fait que tous les tourillons (33 et 34) comportent sur leur périphérie des cannelures (51) qui coopèrent avec des cannelures complémentaires prévues dans les excentriques (37 et 38).

6. Machine selon l'une quelconque des revendications précédentes, caractérisée par le fait que les tourillons (33 et 34) sont reliés entre eux au moyen d'un organe (52 ou 54, 55) assurant une liaison positive.

7. Machine selon la revendication 6, caractérisée par le fait que les tourillons (33 et 34) comportent des poulies crantées (53) sur lesquelles passe une courroie crantée (52).

8. Machine selon la revendication 6, caractérisée par le fait que les tourillons (33 et 34) comportent des roues dentées sur lesquelles passe une chaîne.

9. Machine selon la revendication 6, caractérisée par le fait que les tourillons (33 et 34) sont reliés par des bielles (54, 55) montées de manière tournante sur des excentriques (57 et 58).

10. Machine selon la revendication 9, caractérisée par le fait que chaque tourillon (33, 34) comporte deux excentriques (57 et 58) pour le guidage des bielles (54 et 55) et que ces excentriques (57 et 58) sont décalés d'environ 180°entre eux et d'environ 90° par rapport aux excentriques (37 et 38) des supports (20, 21) des couteaux (18 et 19).

11. Machine selon l'une quelconque des revendications 1 à 5, caractérisée par le fait que les excentriques (38) du support (20) du couteau (18) sont décalés d'un angle ($\alpha$) d'environ 160° par rapport aux excentriques (37) du support (21) de l'autre couteau (19).

12. Machine selon l'une quelconque des revendications précédentes, caractérisée par le fait que la valeur de l'excentricité des excentriques (37 et 38) du tourillon inférieur (33) est différente de celle des excentriques (37 et 38) du tourillon supérieur (34).

13. Machine selon la revendication 12, caractérisée par le fait que la valeur de l'excentricité des excentriques (37 et 38) du tourillon inférieur (33) est plus petite que celle des excentriques (37 et 38) du tourillon supérieur (34).

14. Machine selon l'une quelconque des revendications précédentes, caractérisée par le fait que l'axe d'articulation (7) du dispositif de coupe (6) sur le bras support (5) se situe pratiquement dans le plan de coupe des couteaux (18 et 19).

15. Machine selon la revendication 14, caractérisée par le fait que les supports (20 et 21) des couteaux (18 et 19) comportent des ouvertures centrales (61).

16. Machine selon la revendication 1, caractérisée par le fait que le dispositif de coupe (6) comporte trois couteaux animés (18, 19 et 63) disposés côte à côte, indépendants entre eux et fixés sur des supports (20, 21 et 64) montés libre en rotation sur des excentriques (37, 38 et 66) des tourillons (33 et 34), lesquels excentriques (37, 38 et 66) de chaque tourillon (33, 34) sont décalés entre eux d'angles d'environ 120°.

## Claims

1. Machine for removing blocks of forage from a substantially horizontal silo, mainly comprising a frame (1) provided with tines (4) in its lower part and, in a certain distance above this tines (4), with an arm (5) or a support rail supporting a cutting device (6) with one or more knives (18, 19) driven during the cutting operation and which are moved and/or guided by means of said arm or support rail, each knive (18, 19) being connected to a support (20, 21) moved by means of an eccentric part (32) of a stud (33, 34) rotating around its longitudinal axis during work, characterized in that each support (20, 21) of a knive (18, 19) freely rotates on the eccentric parts (32) of several studs (33 and 34), that one of these studs is arranged near to each end of said supports (20 and 21) and that one of these studs (33 and 34) is connected to driving means (46).

2. Machine as defined in Claim 1, characterized in that each stud (33 and 34) is made up of a cylindrical body (36) equipped with two eccentrics (37 and 38) displaced one with regard to the other according to an angle of about 180°.

3. Machine as defined in Claim 1 or 2, characterized in that all the supports (20 and 21) of the knives (18 and 19) of the cutting device (6) are mounted on two identical studs (33 and 34).

4. Machine as defined in anyone of the preceding Claims, characterized in that at least the stud (33 or 34) which is connected to the driving means (46) has grooves (51) on its periphery, cooperating with complementary grooves foreseen in the eccentrics (37 and 38).

5. Machine as defined in anyone of the preceding Claims, characterized in that all the studs (33 and 34) have grooves (51) on their periphery,cooperating with complementary grooves foreseen in the eccentrics (37 and 38).

6. Machine as defined in anyone of the preceding Claims, characterized in that the studs (33 and 34) are linked one to the other by means of a system (52 or 54, 55) providing a positive connection.

7. Machine as defined in Claim 6, characterized in that the studs (33 and 34) comprise notched pulleys (53) on which a notched belt (52) passes.

8. Machine as defined in Claim 6, characterized in that the studs (33 and 34) comprise toothed wheels on which a chain passes.

9. Machine as defined in Claim 6, characterized in that the studs (33 and 34) are connected by means of rods (54, 55) which are rotatably mounted on eccentrics (57 and 58).

10. Machine as defined in Claim 9, characterized in that each stud (33, 34) comprises two eccentrics (57 and 58) for guiding the rods (54 and 55) and in that these eccentrics (57 and 58) are displaced of about 180° one with regard to the other and of about 90° with regard to the eccentrics (37 and 38) of the supports (20, 21) of the knives (18 and 19).

11. Machine as defined in anyone of Claims 1 to 5, characterized in that the eccentrics (38) of the support (20) of the knive (18) are displaced according to an angle ($\alpha$) of about 160° with regard to the eccentrics (37) of the support (21) of the knive (19).

12. Machine as defined in anyone of the preceding Claims, characterized in that the eccentricity value of the eccentrics (37 and 38) of the lower stud (33) differs from that of the eccentrics (37 and 38) of the upper stud (34).

13. Machine as defined in Claim 12, characterized in that the eccentricity value of the eccentrics (37 and 38) of the lower stud (33) is smaller than that of the eccentrics (37 and 38) of the upper stud (34).

14. Machine as defined in anyone of the preceding Claims, characterized in that the axis of articulation (7) of the cutting device (6) of the support arm (5) is located virtually on the cutting plane of the knives (18 and 19).

15. Machine as defined in Claim 14, characterized in that the supports (20 and 21) of the knives (18 and 19) are provided with central openings (61).

16. Machine as defined in Claim 1, characterized in that the cutting device (6) comprises three driven knives (18, 19 and 63) arranged one beside the other, independent one from the other and fastened to supports (20, 21 and 64) which are freely rotating on the eccentrics (37, 38 and 66) of the studs (33 and 34), said eccentrics (37, 38 and 66) of each stud (33, 34) being displaced one with regard to the other according to angles of about 120°.

**Patentansprüche**

1. Maschine zur Entnahme von Futterblöcken aus einem nahezu horizontalen Silo, mit insbesonders einem Rahmen (1) an welchem Gabelzinken (4) am unteren Teil und, in gewissem bestand oberhalb dieser Gabelzinken, ein Tragarm (5) oder eine Schiene angebracht sind, der eine Schneidvorrichtung (6) trägt, welche ein oder mehrere Messer (18, 19) aufweist, die während dem Ausschneiden angetrieben sind und mittels dieses Tragarms oder der Schiene versetzt und/oder geleitet werden, wobei jedes Messer (18, 19) an einem Halter (20, 21) angebracht ist, welcher mittels eines exzentrischen Teils (32) eines sich während der Arbeit um seine Längsachse drehenden Drehzapfens (33, 34) bewegt wird, dadurch gekennzeichnet, dass jeder Halter (20, 21) eines Messers (18, 19) freirotierend auf exzentrische Teile (32) von mehreren Drehzapfen (33 und 34) montiert ist, dass einer dieser Drehzapfen in der Nähe von jedem Ende der Halter (20, 21) angeordnet ist, und dass einer dieser Drehzapfen (33 und 34) mit einem Antriebsmittel (46) in Verbindung steht.

2. Maschine nach Anspruch 1, dadurch gekennzeichnet, dass jeder der Drehzapfen (33 und 34) aus einem zylindrischen Körper (36) mit zwei Exzentern (37 und 38), die gegeneinander um einen Winkel von nahezu 180° versetzt sind, besteht.

3. Maschine nach Anspruch 1 oder 2, dadurch gekennzeichnet, das alle Halter (20 und 21) der Messer (18 und 19) der Schneidvorrichtung (6) auf zwei selbe Drehzapfen (33 und 34) montiert sind.

4. Maschine nach irgend einem der vorherstehenden Ansprüche, dadurch gekennzeichnet, dass zumindest der Drehzapfen (33 oder 34) der mit dem Antriebsmittel (46) in Verbindung steht auf seinem Umfang Riffelungen (51) aufweist, die mit komplementären, in den Exzenter (37 und 38) vorgesehenen Riffelungen kooperieren.

5. Maschine nach irgend einem der vorherstehenden Ansprüche, dadurch gekennzeichnet, dass alle Drehzapfen (33 und 34) auf ihrem Umfang Riffelungen (51) aufweisen, welche mit komplementären, in den Exzenter (37 und 38) vorgesehenen Riffelungen kooperieren.

6. Maschine nach irgend einem der vorherstehenden Ansprüche, dadurch gekennzeichnet, dass die Drehzapfen (33 und 34) mittels eines, eine positive Verbindung sicherndes Organs (52 oder 54, 55) miteinander verbunden sind.

7. Maschine nach Anspruch 6, dadurch gekennzeichnet, dass die Drehzapfen (33 und 34) Zahnscheiben (53) besitzen, auf welchen ein Zahnriemen (52) umläuft.

8. Maschine nach Anspruch 6, dadurch gekennzeichnet, dass die Drehzapfen (33 und 34) Zahnräder besitzen auf welchen eine Kette umläuft.

9. Maschine nach Anspruch 6, dadurch gekennzeichnet, dass die Drehzapfen (33 und 34) mittels, auf Exzenter (57 und 58) drehbar angebrachte Lenker (54, 55) miteinander verbunden sind.

10. Maschine nach Anspruch 9, dadurch gekennzeichnet, dass jeder Drehzapfen (33, 34) mit zwei, zu der Führung der Lenker (54 und 55) dienenden Exzentern (57 und 58) versehen ist und, dass diese Exzenter (57 und 58) gegeneinander um nahezu 180° und um nahezu 90° hinsichtlich der Exzenter (37 und 38) der Halter (20, 21) der Messer (18 und 19) versetzt sind.

11. Maschine nach irgend einem der Ansprüche 1 bis 5, dadurch gekennzeichnet, dass die Exzenter (38) des Halters (20) des Messers (18) hinsichtlich zu den Exzentern (37) des mit dem anderen Messer (19) versehenen Halters (21) um einen Winkel ($\alpha$) von nahezu 160° versetzt sind.

12. Maschine nach irgend einem der vorherstehenden Ansprüche, dadurch gekennzeichnet, dass der Exzentrizitätswert der Exzenter (37 und 38) des unteren Drehzapfens (33) verschieden ist als der der Exzenter (37 und 38) des oberen Drehzapfens (34).

13. Maschine nach Anspruch 12, dadurch gekennzeichnet, dass der Exzentrizitätswert der Exzenter (37 und 38) des unteren Drehzapfens (33) geringer ist als der der Exzenter (37 und 38) des oberen Drehzapfens (34).

14. Maschine nach irgend einem der vorherstehenden Ansprüche, dadurch gekennzeichnet, dass die Gelenkachse (7) der Schneidvorrichtung (6) auf dem Tragarm (5) sich ungefähr in der Schneidebene der Messer (18 und 19) befindet.

15. Maschine nach Anspruch 14, dadurch gekennzeichnet, dass die Halter (20 und 21) der Messer (18 und 19) zentrale Öffnungen (61) aufweisen.

16. Maschine nach Anspruch 1, dadurch gekennzeichnet, dass die Schneidvorrichtung (6) drei angetriebene Messer (18, 19 und 63) aufweist, die nebeneinander angeordnet, unabhängig voneinander und an Halter (20, 21 und 64) angebracht sind, die frei drehbar auf Exzenter (37, 38 und 66) der Drehzapfen (33 und 34) montiert sind, wobei die Exzenter (37, 38 und 66) von jedem Drehzapfen (33, 34) gegeneinander um Winkel von ungefähr 120° versetzt sind.

FIG.1

FIG. 2

FIG.3

FIG. 4

## FIG.6

## FIG.5

FIG.8

FIG.7

FIG.10

FIG. 9

FIG.12

FIG. 11